# EUROPEAN PATENT APPLICATION

(11) **EP 4 495 954 A1**
(43) Date of publication of application: **22.01.2025**
(21) Application number: 23770920.9
(22) Date of filing: 17.03.2023
(51) Int. Cl.: H01B 1/06, H01B 1/08, H01M 10/052, H01M 10/0562

(54) **SOLID ELECTROLYTE LAYER, AND ALL-SOLID-STATE SECONDARY BATTERY**

(30) Priority: 17.03.2022 JP 2022042605
(71) Applicant: TDK Corporation, Tokyo 103-6128 (JP)
(72) Inventor: TAKEUCHI, Keiko, Tokyo 103-6128 (JP); TANAKA, Teiichi, Tokyo 103-6128 (JP); MASUKO, Taisuke, Tokyo 103-6128 (JP); TSUKADA, Takeo, Tokyo 103-6128 (JP)
(74) Representative: Epping - Hermann - Fischer
(86) International application number: PCT/JP2023/010655
(87) International publication number: WO 2023/176968

(57) **Abstract**

A solid electrolyte layer (3) of the present invention is a solid electrolyte layer including a first phase region (31) containing a first solid electrolyte which contains Li, Si, V and O and has a γ-Li₃PO₄ type crystal structure and a second phase region (32) containing a second solid electrolyte which contains Li, Si, V and O, has a different composition from the first solid electrolyte, and has a Li₄SiO₄ type crystal structure. In the solid electrolyte layer (3) of the present invention, the ratio of the volume of the first phase region (31) to the volume of the second phase region (32) is preferably 0.1 or more and 9 or less.

## Description

### TECHNICAL FIELD

The present invention relates to a solid electrolyte layer and an all-solid-state secondary battery.

Priority is claimed on Japanese Patent Application No. 2022-042605, filed March 17, 2022, the content of which is incorporated herein by reference.

### BACKGROUND ART

**In** recent years, the development of electronics technology has remarkably progressed, and portable electronic devices have become smaller, lighter, thinner, and more multifunctional. Accordingly, there is a strong demand for batteries serving as electronic device power sources to be smaller, lighter, thinner, and more reliable. Thus, all-solid-state secondary batteries that use solid electrolytes as electrolytes have been focused on. In the related art, sulfide-based solid electrolytes and oxide-based solid electrolytes have been mainly used as solid electrolytes for all-solid-state secondary batteries.

Since sulfide-based solid electrolytes have excellent plasticity, it is possible to form an interface between a solid electrolyte and an active material by powder compacting. However, sulfide-based solid electrolytes have a safety problem because they generate hydrogen sulfide when they react with water.

On the other hand, oxide-based solid electrolytes are safe because there is no risk of hydrogen sulfide being generated from a reaction with water. However, in order to obtain high ion conductivity in oxide-based solid electrolytes, densification is necessary, which requires sintering at a high temperature. However, in the sintering for forming a dense solid electrolyte layer, the oxide-based solid electrolyte and the active material may react with each other, and a reaction layer with low ion conductivity may be formed at the interface between the oxide-based solid electrolyte and the active material.

LSPO(Li₃₊ₓSiₓP₁₋ₓO₄) is known as an oxide-based solid electrolyte that is relatively stable against the active material even when sintering is performed at a high temperature for densification (refer to Non-Patent Document 1). However, LSPO has a problem that the ion conductivity is low, at around 1×10⁻⁶ S/cm (refer to Non-Patent Document 2).

Non-Patent Document 3 describes that, in the γ-Li₃PO₄ type crystal structure, there is a strong correlation between the ion conductivity and the lattice volume, and the ion conductivity becomes higher as the lattice volume becomes larger. In addition, Non-Patent Document 3 states that the ion conductivity is increased by substituting P in LSPO with V.

### [Citation List]

### [Non-Patent Document]

[Non-Patent Document 1]
   Solid State Ionics 283 (2015) 109-114
[Non-Patent Document 2]
   Ionics 7 (2001) 469-473
[Non-Patent Document 3]
   Solid State Ionics 15 (1985)

### SUMMARY OF INVENTION

### Technical Problem

In the related art, various solid electrolytes have been used in all-solid-state secondary batteries. However, in all-solid-state secondary batteries, further improvement in ion conductivity is required, and a solid electrolyte layer with even better ion conductivity is required.

The present invention has been made in view of the above circumstances, and an object of the present invention is to provide a solid electrolyte layer having high ion conductivity and an all-solid-state secondary battery having the same.

### Solution to Problem

In order to achieve the above object, the following aspects are provided.

[1] A solid electrolyte layer according to one aspect of the present invention includes a first phase region containing a first solid electrolyte which contains Li, Si, V and O and has a γ-Li₃PO₄ type crystal structure, and a second phase region containing a second solid electrolyte which contains Li, Si, V and O, has a different composition from the first solid electrolyte, and has a Li₄SiO₄ type crystal structure.
[2] In the solid electrolyte layer according to [1], the ratio of the volume of the first phase region to the volume of the second phase region is preferably 0.1 or more and 9 or less.
[3] In the solid electrolyte layer according to [1] or [2], the ratio of the number of Si atoms to the number of V atoms contained in the first phase region is preferably 0.1 or more and less than 1.
[4] In the solid electrolyte layer according to any one of [1] to [3], the ratio of the number of Si atoms to the number of V atoms contained in the second phase region is preferably 1 or more and 9 or less.
[5] An all-solid-state secondary battery according to one aspect of the present invention includes the solid electrolyte layer according to any one of [1] to [4], a positive electrode layer, and a negative electrode layer, the solid electrolyte layer being sandwiched between the positive electrode layer and the negative electrode layer.

### ADVANTAGEOUS EFFECTS OF INVENTION

The solid electrolyte layer of the present invention includes a first phase region containing a first solid electrolyte which contains Li, Si, V and O and has a γ-Li₃PO₄ type crystal structure, and a second phase region containing a second solid electrolyte which contains Li, Si, V and O, has a different composition from the first solid electrolyte, and has a Li₄SiO₄ type crystal structure. Therefore, the solid electrolyte layer of the present invention has high ion conductivity.

Therefore, the all-solid-state secondary battery including the solid electrolyte layer of the present invention, a positive electrode layer, and a negative electrode layer, the solid electrolyte layer being sandwiched between the positive electrode layer and the negative electrode layer, has favorable ion conductivity.

### BRIEF DESCRIPTION OF DRAWINGS

FIG. 1 is a schematic cross-sectional diagram showing an all-solid-state secondary battery according to a first embodiment.
FIG. 2 is a schematic cross-sectional diagram showing an enlarged part of a solid electrolyte layer 3 of an all-solid-state secondary battery 10 shown in FIG. 1.

### DESCRIPTION OF EMBODIMENTS

In order to achieve the above object, the inventors have focused on the relationship between the crystal structure and the ion conductivity in a solid electrolyte layer containing an oxide-based solid electrolyte containing Li, Si, V and O, and have conducted extensive studies.

As a result, they found that a solid electrolyte layer including a first phase region containing a first solid electrolyte which contains Li, Si, V and O and has a γ-Li₃PO₄ type crystal structure and a second phase region containing a second solid electrolyte which contains Li, Si, V and O, has a different composition from the first solid electrolyte, and has a Li₄SiO₄ type crystal structure has a higher ion conductivity than a solid electrolyte layer including only a first phase region or only a second phase region, and completed the present invention.

The mechanism by which the solid electrolyte layer including the first phase region and the second phase region has a higher ion conductivity than the solid electrolyte layer including only the first phase region or only the second phase region is not clear, but it is speculated that this is because a grain boundary layer having high ion conductivity is formed at the interface between the first phase region and the second phase region which have different crystal phases, during a firing process in the procedure of producing the all-solid-state secondary battery.

Hereinafter, a solid electrolyte layer and an all-solid-state secondary battery of the present embodiment will be appropriately described in detail with reference to the drawings. In the drawings used in the following description, in order to facilitate understanding features of the present invention, feature parts are enlarged for convenience of illustration in some cases. Therefore, size ratios and the like between components may be different from those of actual components. Materials, sizes and the like provided as exemplary examples in the following description are examples not limiting the present invention, and they can be appropriately changed and implemented within a range not changing the scope and spirit of the invention.

### [All-solid-state secondary battery]

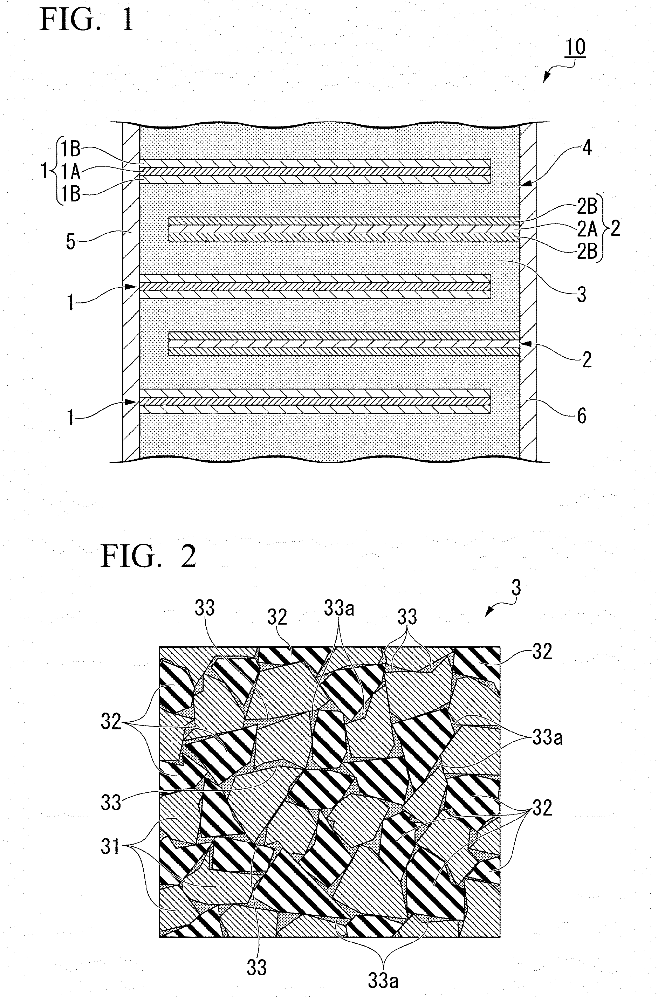

FIG. 1 is a schematic cross-sectional diagram showing an all-solid-state secondary battery 10 of the present embodiment. The all-solid-state secondary battery 10 includes a laminate 4, a first external terminal 5, and a second external terminal 6. The first external terminal 5 and the second external terminal 6 are formed of a conductive material. The first external terminal 5 and the second external terminal 6 are in contact with opposing surfaces of the laminate 4. The first external terminal 5 and the second external terminal 6 extend in a direction intersecting (orthogonal to) the lamination surface of the laminate 4.

The laminate 4 has a positive electrode layer 1, a negative electrode layer 2, and a solid electrolyte layer 3 interposed between the positive electrode layer 1 and the negative electrode layer 2. The laminate 4 is a sintered component obtained by laminating the positive electrode layer 1 and the negative electrode layer 2 with the solid electrolyte layer 3 therein and performing sintering. The numbers of positive electrode layers 1 and negative electrode layers 2 included in the laminate 4 each may be one, two or more. As shown in FIG. 1, the solid electrolyte layer 3 is provided not only between the positive electrode layer 1 and the negative electrode layer 2 but also between the positive electrode layer 1 and the second external terminal 6, and between the negative electrode layer 2 and the first external terminal 5. In addition, as shown in FIG. 1, one end of the positive electrode layer 1 is connected to the first external terminal 5. One end of the negative electrode layer 2 is connected to the second external terminal 6.

The all-solid-state secondary battery 10 is charged or discharged by exchange of ions between the positive electrode layer 1 and the negative electrode layer 2 with the solid electrolyte layer 3 therein.

### "Solid electrolyte layer"

The solid electrolyte layer 3 can move ions by an externally applied electric field. The solid electrolyte forming the solid electrolyte layer 3 is a substance (for example, particles) that can move ions by an externally applied electric field.

FIG. 2 is a schematic cross-sectional diagram showing an enlarged part of the solid electrolyte layer 3 of the all-solid-state secondary battery 10 shown in FIG. 1. As shown in FIG. 2, the solid electrolyte layer 3 includes a first phase region 31 and a second phase region 32.

The first phase region 31 includes a first solid electrolyte which contains Li, Si, V and O and has a γ-Li₃PO₄ type crystal structure. The first phase region 31 may be formed of the first solid electrolyte. The second phase region 32 includes a second solid electrolyte which contains Li, Si, V and O, has a different composition from the first solid electrolyte, and has a Li₄SiO₄ type crystal structure. The second phase region 32 may be formed of a second solid electrolyte. The solid electrolyte layer 3 formed of only the first phase region 31 and the second phase region 32 is preferable.

The solid electrolyte layer 3 may include a region other than the first phase region 31 and the second phase region 32 as long as the effects of the present invention are not impaired. The region other than the first phase region 31 and the second phase region 32 may be, for example, a phase formed of a metal oxide having a composition and crystal structure different from those of the first phase region 31 and the second phase region 32.

**In** the solid electrolyte layer 3, the first phase region 31 and the second phase region 32 may be uniformly distributed or non-uniformly distributed, and it is preferable to distribute them approximately uniformly because the first phase region 31 and the second phase region 32 are likely to come into contact with each other, and the interface area between the first phase region 31 and the second phase region 32 is wider. In addition, the shape and size of the first phase region 31 and the second phase region 32 are not particularly limited, and may be, for example, in the form of irregular particles as shown in FIG. 2.

In FIG. 2, reference numeral 33 indicates grain boundaries between the first phase region 31 and the second phase region 32, between the first phase regions 31, and between the second phase regions 32. A grain boundary layer 33a having high ion conductivity is formed at the grain boundary 33 between the first phase region 31 and the second phase region 32 among the grain boundaries 33.

The grain boundary layer 33a is speculated to be formed at the interface between the first phase region 31 and the second phase region 32 because the crystal phases of the first phase region 31 containing a first solid electrolyte having a γ-Li₃PO₄ type crystal structure and the second phase region 32 containing a second solid electrolyte having a Li₄SiO₄ type crystal structure are different. Therefore, for example, when the solid electrolyte layer has only one crystal phase such as when the solid electrolyte layer is formed of only one of the first phase region 31 and the second phase region 32, a grain boundary layer having high ion conductivity is not formed. Therefore, the solid electrolyte layer having only one crystal phase has a lower ion conductivity than the solid electrolyte layer 3 of the present embodiment in which a plurality of crystal phases coexist.

The ratio of the volume of the first phase region 31 to the volume of the second phase region 32 included in the solid electrolyte layer 3 (first phase region/second phase region) is not particularly limited, and is preferably 0.1 or more and 9 or less, more preferably 0.25 or more and 4 or less, and still more preferably 0.5 or more and 1.5 or less. When the ratio of the volume of the first phase region 31 to the volume of the second phase region 32 is 0.1 or more and 9 or less, since the first phase region 31 and the second phase region 32 are likely to come into contact with each other, the interface area between the first phase region 31 and the second phase region 32 is wider, and a large number of grain boundary layers 33a having high ion conductivity are generated. Therefore, the solid electrolyte layer 3 having high ion conductivity is formed.

The first solid electrolyte may contain only Li, Si, V and O or may contain at least one element selected from the group consisting of Ti, Co, Ni, and Mn as long as the γ-Li₃PO₄ type crystal structure can be maintained, as necessary, depending on the characteristics required for the all-solid-state secondary battery 10.

In addition, the first phase region 31 may contain not only the first solid electrolyte but also, for example, a sintering aid, and components derived from active material substances forming the positive electrode layer 1 and/or the negative electrode layer 2 (at least one of the positive electrode layer 1 and the negative electrode layer 2) as long as the effects of the present invention are not impaired.

The ratio (Si/V) of the number of Si atoms to the number of V atoms contained in the first phase region 31 is preferably 0.1 or more and less than 1, and the Si/V is more preferably 0.5 or more and 0.8 or less. When the ratio (Si/V) of the number of Si atoms to the number of V atoms contained in the first phase region 31 is 0.1 or more and less than 1, since the first phase region 31 has a stable (strongly bonded and not easily broken) γ-Li₃PO₄ type crystal structure, a large number of grain boundary layers 33a having high ion conductivity are generated at the interface with the second phase region 32. Therefore, the solid electrolyte layer 3 having high ion conductivity is formed.

The second solid electrolyte may contain only Li, Si, V and O or may contain at least one element selected from the group consisting of Ti, Co, Ni, and Mn as long as the Li₄SiO₄ type crystal structure can be maintained, as necessary, depending on the characteristics required for the all-solid-state secondary battery 10.

In addition, the second phase region 32 may contain not only the second solid electrolyte but also, for example, a sintering aid and components derived from active material substances forming the positive electrode layer 1 and/or the negative electrode layer 2 (at least one of the positive electrode layer 1 and the negative electrode layer 2) as long as the effects of the present invention are not impaired.

The ratio (Si/V) of the number of Si atoms to the number of V atoms contained in the second phase region 32 is preferably 1 or more and 9 or less, and the Si/V is more preferably 1.2 or more and 2 or less. When the ratio (Si/V) of the number of Si atoms to the number of V atoms contained in the second phase region 32 is 1 or more and 9 or less, since the second phase region 32 has a stable (strongly bonded and not easily broken) Li₄SiO₄ type crystal structure, a large number of grain boundary layers 33a having high ion conductivity are generated at the interface with the first phase region 31. Therefore, the solid electrolyte layer 3 having high ion conductivity is formed.

When the laminate 4 is a sintered component, for the reasons for production such as improvement in productivity and improvement in yield when the solid electrolyte layer 3 is formed, a sintering aid may be used together with the first solid electrolyte and the second solid electrolyte as the material of the solid electrolyte layer 3. In this case, the solid electrolyte layer 3 may contain a sintering aid that remains without being removed during a firing process for producing the laminate 4.

As the sintering aid, any known sintering aid can be used as long as it has an effect of improving sintering properties. Specific examples of sintering aids include compounds containing lithium (Li), boron (B), zinc (Zn), and bismuth (Bi).

### "Positive electrode layer"

As shown in FIG. 1, the positive electrode layer 1 includes, for example, a positive electrode current collector 1A and a positive electrode active material layer 1B. As shown in FIG. 1, the positive electrode active material layer 1B may be formed on both surfaces of the positive electrode current collector 1A or may be formed on only one surface thereof.

### (Positive electrode current collector)

The positive electrode current collector 1A has excellent conductivity. The positive electrode current collector 1A is formed of, for example, a metal such as silver, palladium, gold, platinum, aluminum, copper, nickel, stainless steel, or iron, or an alloy thereof. The positive electrode current collector 1A may contain, for example, a positive electrode active material such as a lithium vanadium compound (LiV₂O₅, Li₃V₂(PO₄)₃, LiVOPO₄).

### (Positive electrode active material layer)

The positive electrode active material layer 1B contains a positive electrode active material. The positive electrode active material layer 1B may contain a conductive assistant and a solid electrolyte.

### (Positive electrode active material)

The positive electrode active material is not particularly limited as long as it can reversibly release and absorb lithium ions and desorb and insert lithium ions. For example, a positive electrode active material used in a known lithium-ion secondary battery can be used.

The positive electrode active material is preferably, for example, one, two or more selected from among transition metal oxides and transition metal composite oxides.

As the positive electrode active material, for example, lithium cobalt oxide (LiCoO₂), lithium nickel oxide (LiNiO₂), lithium manganese spinel (LiMn₂O₄), a composite metal oxide represented by a general formula: LiNiₓCo_{y}Mn_{z}MₐO₂ (x+y+z+a=1, 0≤x≤1, 0≤y≤1, 0≤z≤1, 0≤a≤1, and M is one or more elements selected from among Al, Mg, Nb, Ti, Cu, Zn, and Cr), and lithium titanate (Li₄Ti₅O₁₂) may be used.

As the positive electrode active material, a lithium-free positive electrode active material may be used. The lithium-free positive electrode active material can be used by disposing a negative electrode active material doped with metallic lithium and/or lithium ions (at least one of metallic lithium and lithium ions) in the negative electrode layer 2 in advance and starting the all-solid-state secondary battery 10 with discharge. Examples of lithium-free positive electrode active materials include metal oxides (MnO₂, V₂O₅, etc.).

### (Conductive assistant)

The conductive assistant is not particularly limited as long as it improves the electron conductivity in the positive electrode active material layer 1B, and a known conductive assistant can be used. Examples of conductive assistants include carbonbased materials such as graphite, carbon black, graphene, and carbon nanotubes, metals such as gold, platinum, silver, palladium, aluminum, copper, nickel, stainless steel, and iron, conductive oxides such as indium tin oxide (ITO), and mixtures thereof. The conductive assistant may be in the form of a powder or fiber.

### (Solid electrolyte)

The solid electrolyte contained in the positive electrode active material layer 1B improves the ion conductivity in the positive electrode active material layer 1B. As the solid electrolyte, one of known solid electrolytes may be used or two or more thereof may be used in combination. As the solid electrolyte, those the same as the first solid electrolyte or the second solid electrolyte used in the solid electrolyte layer 3 may be used.

### "Negative electrode layer"

As shown in FIG. 1, the negative electrode layer 2 includes, for example, a negative electrode current collector 2A and a negative electrode active material layer 2B. As shown in FIG. 1, the negative electrode active material layer 2B may be formed on both surfaces of the negative electrode current collector 2A or may be formed on only one surface thereof.

### (Negative electrode current collector)

The configuration of the negative electrode current collector 2A is the same as the configuration of the positive electrode current collector 1A.

### (Negative electrode active material layer)

The negative electrode active material layer 2B contains a negative electrode active material. The negative electrode active material layer 2B may contain a conductive assistant and a solid electrolyte.

### (Negative electrode active material)

The negative electrode active material is a compound that can absorb and release ions. The negative electrode active material is a compound that exhibits a lower potential than the positive electrode active material. As the negative electrode active material, the same material as the positive electrode active material can be used. In consideration of the potential of the negative electrode active material and the potential of the positive electrode active material, the negative electrode active material and the positive electrode active material used in the all-solid-state secondary battery 10 are determined.

### (Conductive assistant)

The conductive assistant improves the electron conductivity of the negative electrode active material layer 2B. As the conductive assistant, the same material as that of the positive electrode active material layer 1B can be used.

### (Solid electrolyte)

The solid electrolyte contained in the negative electrode active material layer 2B improves ion conduction in the negative electrode active material layer 2B. As the solid electrolyte, one of known solid electrolytes may be used or two or more thereof may be used in combination. As the solid electrolyte, those the same as the first solid electrolyte or the second solid electrolyte used in the solid electrolyte layer 3 may be used.

### [Method of producing all-solid-state secondary battery]

Next, the method of producing the all-solid-state secondary battery 10 of the present embodiment will be described.

First, the laminate 4 is produced. The laminate 4 can be produced using, for example, a simultaneous firing method or a sequential firing method, and is preferably produced using a simultaneous firing method. The simultaneous firing method is a method in which materials for forming respective layers are laminated, and then fired all at once to produce the laminate 4. The sequential firing method is a method in which firing is performed whenever each layer is formed. In the simultaneous firing method, the laminate 4 can be produced with fewer operation processes than the sequential firing method. In addition, the laminate 4 produced by the simultaneous firing method is denser than the laminate 4 produced by the sequential firing method. Hereinafter, a method of producing the laminate 4 will be described using a case in which the laminate 4 is produced by the simultaneous firing method as an example.

First, the materials of the positive electrode current collector 1A, the positive electrode active material layer 1B, the solid electrolyte layer 3, the negative electrode active material layer 2B, and the negative electrode current collector 2A constituting the laminate 4 are made into pastes, and a paste corresponding to the material of each layer is produced.

The paste of the solid electrolyte layer 3 is obtained, for example, by forming a solid electrolyte material obtained by mixing particles made of the first solid electrolyte, particles made of the second solid electrolyte, and a sintering aid contained as necessary at a predetermined volume ratio into a paste.

The method of forming each material used for producing the laminate 4 into a paste is not particularly limited, and for example, a method of mixing powders of materials in a vehicle to obtain a paste can be used. Here, the vehicle is a general term for media in a liquid phase. The vehicle in the present embodiment includes a solvent, a binding material (binder), and a plasticizer.

Next, a greensheet is produced. The greensheet is obtained by applying a paste produced for each material onto a base such as a polyethylene terephthalate (PET) film, drying it as necessary, and then peeling off the base. The method of applying a paste is not particularly limited, and for example, known methods such as screen printing, application, transfer, and using a doctor blade can be used.

Next, the greensheets produced for each material are laminated in a desired order and with a desired number of layers to produce a laminated sheet. When the greensheets are laminated, alignment and cutting are performed as necessary. For example, when a parallel type or series-parallel type battery is produced, preferably, alignment is performed so that the end surface of the positive electrode current collector 1A does not match the end surface of the negative electrode current collector 2A, and the greensheets are laminated.

The greensheets that become laminated sheets may be positive electrode units and negative electrode units that are produced in advance.

As the procedure of producing a positive electrode unit, specifically, first, a paste for the solid electrolyte layer 3 is applied onto a base such as a PET film by a doctor blade method and dried to form a sheet-like solid electrolyte layer 3. Next, a paste for the positive electrode active material layer 1B is printed on the solid electrolyte layer 3 by screen printing and dried to form the positive electrode active material layer 1B. Next, a paste for the positive electrode current collector 1A is printed on the positive electrode active material 1B by screen printing and dried to form the positive electrode current collector 1A. Next, a paste for the positive electrode active material layer 1B is printed on the positive electrode current collector 1A by screen printing and dried to form the positive electrode active material layer 1B. Then, the PET film is peeled off to obtain a positive electrode unit. The positive electrode unit is a greensheet in which the solid electrolyte layer 3, the positive electrode active material layer 1B, the positive electrode current collector 1A, and the positive electrode active material layer 1B are laminated in that order.

In addition, in the same procedure, a negative electrode unit is produced. The negative electrode unit is a greensheet in which the solid electrolyte layer 3, the negative electrode active material layer 2B, the negative electrode current collector 2A, and the negative electrode active material layer 2B are laminated in that order.

Next, the positive electrode unit and the negative electrode unit are laminated. In this case, the solid electrolyte layer 3 of the positive electrode unit and the negative electrode active material layer 2B of the negative electrode unit are laminated so that they face each other. Alternatively, the positive electrode active material layer 1B of the positive electrode unit and the solid electrolyte layer 3 of the negative electrode unit are laminated so that they face each other. Accordingly, a laminated sheet in which the positive electrode active material layer 1B, the positive electrode current collector 1A, the positive electrode active material layer 1B, the solid electrolyte layer 3, the negative electrode active material layer 2B, the negative electrode current collector 2A, the negative electrode active material layer 2B, and the solid electrolyte layer 3 are laminated in that order is obtained. Here, when the positive electrode unit and the negative electrode unit are laminated, the positive electrode current collector 1A of the positive electrode unit and the negative electrode current collector 2A of the negative electrode unit are laminated while being alternately shifted.

Next, the produced laminated sheets are pressed all at once to increase the adhesion of the layers, and thus a laminate substrate is formed. Pressing can be performed, for example, by mold pressing, warm isostatic pressing (WIP), cold isostatic pressing (CIP), or isostatic pressing. Pressing is preferably performed while heating. The heating temperature during pressing can be, for example, 40 to 95°C.

Next, the obtained laminate substrate after pressing is cut using a dicing device to obtain a laminate. Then, the obtained laminate is subjected to a binder removal and firing process. Thereby, the laminate 4 formed of a sintered component is obtained.

The binder removal and firing process can be performed, for example, by placing the laminate on a ceramic stand. The binder removal and firing process can be, for example, a process of performing heating at 550°C to 1,100°C in an air atmosphere. The heating time (firing time) can be, for example, 0.1 hours to 6 hours. The heating temperature and firing time in the binder removal and firing process can be appropriately determined depending on the composition of each layer constituting the laminate 4.

When the heating temperature in the binder removal and firing process is 550°C or higher, the grain boundary layer 33a having high ion conductivity is easily formed at the grain boundary 33 between the first phase region 31 and the second phase region 32 in the solid electrolyte layer 3, and the solid electrolyte layer 3 having high ion conductivity is formed. When the heating temperature in the binder removal and firing process is 1,100°C or lower, coarsening of particles constituting the first phase region 31 and the second phase region 32 is inhibited, and the amount of the grain boundary layer 33a increases. As a result, the solid electrolyte layer 3 including the first phase region 31 and the second phase region 32 and having high ion conductivity is formed. The heating temperature in the binder removal and firing process is preferably 600°C to 1,000°C.

The sintered laminate 4 (sintered component) may be put into a cylindrical container together with a polishing material such as alumina, and polished by a barrel polishing method. Accordingly, corners of the laminate 4 can be chamfered. The laminate 4 may be polished by sandblasting. Sandblasting is preferable because only a specific part of the surface of the laminate 4 can be cut.

Next, the first external terminal 5 and the second external terminal 6 are formed on opposing side surfaces of the produced laminate 4. The first external terminal 5 and the second external terminal 6 each can be formed using a method such as a sputtering method, a dipping method, a screen-printing method, or a spray coating method.

Through the above processes, the all-solid-state secondary battery 10 can be produced.

The all-solid-state secondary battery 10 of the present embodiment has the solid electrolyte layer 3 including the first phase region 31 containing a first solid electrolyte which contains Li, Si, V and O and has a γ-Li₃PO₄ type crystal structure and the second phase region 32 containing a second solid electrolyte which contains Li, Si, V and O, has a different composition from the first solid electrolyte, and has a Li₄SiO₄ type crystal structure. Therefore, the solid electrolyte layer 3 of the all-solid-state secondary battery 10 of the present embodiment has high ion conductivity. **In** the all-solid-state secondary battery 10 of the present embodiment, the principle by which the solid electrolyte layer 3 having high ion conductivity is formed is not clear, but it is speculated that this is because the grain boundary layer 33a having high ion conductivity is formed at the interface between the first phase region 31 and the second phase region 32, which have different crystal phases, during a firing process in the procedure of producing the all-solid-state secondary battery 10.

The embodiments of the present invention have been described in detail above with reference to the drawings, but configurations and combinations thereof in the embodiments are only examples, and additions, omissions, substitutions and other modifications of the configurations can be made without departing from the spirit and scope of the present invention.

### [Examples]

### "Example 1"

Li₂CO₃, SiO₂ and Li₃VO₄ were prepared as starting materials. Li₂CO₃, SiO₂ and Li₃VO₄ were weighed out so that the molar ratio was 4:2:3, and wet-mixed for 16 hours using a ball mill with water as a dispersion medium. The obtained mixture was calcined at 1,200°C for 2 hours to obtain particles composed of Li_{3.4}Si_{0.4}V_{0.6}O₄. The obtained particles were subjected to X-ray diffraction measurement using CuKα rays with an X-ray diffraction device (X'pert PRO, commercially available from PANlytical), and confirmed to have a γ-Li₃PO₄ type crystal structure. Through the above processes, particles made of the first solid electrolyte of Example 1 were obtained.

Li₂CO₃, SiO₂ and Li₃VO₄ were prepared as starting materials. Li₂CO₃, SiO₂ and Li₃VO₄ were weighed out so that the molar ratio was 6:3:2, and wet-mixed for 16 hours using a ball mill with water as a dispersion medium. The obtained mixture was calcined at 1,200°C for 2 hours to obtain particles composed of Li_{3.6}Si_{0.6}V_{0.4}O₄. The obtained particles were subjected to X-ray diffraction measurement using CuKα rays with an X-ray diffraction device (X'pert PRO, commercially available from PANlytical), and confirmed to have a Li₄SiO₄ type crystal structure. Through the above processes, particles made of the second solid electrolyte of Example 1 were obtained.

5 volume% of the particles made of the first solid electrolyte and 95 volume% of the particles made of the second solid electrolyte obtained in this manner were weighed out, and wet-mixed using a ball mill with water as a dispersion medium, and then dried to obtain a mixed powder of the first solid electrolyte and the second solid electrolyte.

Next, the obtained mixed powder was molded into a disk shape, placed on a ceramic stand, and fired by heating at 900°C for 0.5 hours in an air atmosphere to obtain a solid electrolyte layer of Example 1, which was made of a fired component.

### "Example 2 to Example 7"

Solid electrolyte layers of Example 2 to Example 7, which were made of a fired component, were obtained in the same manner as in Example 1 except that the percentages of the particles made of the first solid electrolyte and the particles made of the second solid electrolyte used as the materials of the solid electrolyte layer were changed and the total percentage was 100 volume%.

### "Examples 8 to 11"

Particles composed of Li_{3.44}Si_{0.44}V_{0.56} (Example 8), particles composed of Li_{3.33}Si_{0.33}V_{0.67}O₄ (Example 9), particles composed of Li_{3.1}Si_{0.1}V_{0.9}O₄ (Example 10), and particles composed of Li_{3.05}Si_{0.05}V_{0.95}O₄ (Example 11) were obtained in the same manner as in Example 1 except that the molar ratio of Li₂CO₃, SiO₂ and Li₃VO₄ used as materials of the particles made of the first solid electrolyte was changed. The obtained particles were subjected to X-ray diffraction measurement using CuKα rays with an X-ray diffraction device (X'pert PRO, commercially available from PANlytical), and confirmed to have a γ-Li₃PO₄ type crystal structure. Through the above processes, particles made of the first solid electrolyte of Examples 8 to 11 were obtained.

Then, solid electrolyte layers of Examples 8 to 11, which were made of a fired component, were obtained in the same manner as in Example 3 except that particles made of the first solid electrolyte of Examples 8 to 11 were used.

### "Examples 12 to 16"

Particles composed of Li_{3.95}Si_{0.95}V_{0.05}O₄ (Example 12), particles composed of Li_{3.67}Si_{0.67}V_{0.33}O₄ (Example 13), particles composed of Li_{3.83}Si_{0.83}V_{0.17}O₄ (Example 14), particles composed of Li_{3.9}Si_{0.9}V_{0.1}O₄ (Example 15), and particles composed of Li_{3.91}Si_{0.91}V_{0.09}O₄ (Example 16) were obtained in the same manner as in Example 1 except that the molar ratio of Li₂CO₃, SiO₂ and Li₃VO₄ used as materials of the particles made of the second solid electrolyte was changed. The obtained particles were subjected to X-ray diffraction measurement using CuKα rays with an X-ray diffraction device (X'pert PRO, commercially available from PANlytical) and confirmed to have a Li₄SiO₄ type crystal structure. Through the above processes, particles made of the second solid electrolyte of Examples 12 to 16 were obtained.

Then, solid electrolyte layers of Examples 12 to 16, which were made of a fired component, were obtained in the same manner as in Example 3 except that particles made of the second solid electrolyte of Examples 12 to 16 were used.

### "Comparative Example 1"

A solid electrolyte layer of Comparative Example 1, which was made of a fired component, was obtained in the same manner as in Example 1 except that 100 volume% of particles made of the first solid electrolyte was used, and no particles made of the second solid electrolyte were used.

### "Comparative Example 2"

A solid electrolyte layer of Comparative Example 2, which was made of a fired component, was obtained in the same manner as in Example 1 except that no particles made of the first solid electrolyte were used and 100 volume% of particles made of the second solid electrolyte was used.

For the solid electrolyte layers of Example 1 to Example 15, Comparative Example 1, and Comparative Example 2 obtained in this manner, Table 1 shows the composition of the first solid electrolyte (the first phase region 31), the ratio (Si/V of the first phase region) of the number of Si atoms to the number of V atoms contained in the first phase region 31, the composition of the second solid electrolyte (the second phase region 32), and the ratio (Si/V of the second phase region) of the number of Si atoms to the number of V atoms contained in the second phase region 32. Here, in Table 1, the first phase region 31 is shown as a region A, and the second phase region 32 is shown as a region B. In addition, 100 volume% is shown as 1.

Here, the composition of the first phase region 31 in the solid electrolyte layers of Example 1 to Example 15, Comparative Example 1, and Comparative Example 2 can be considered to be the same as that of the first solid electrolyte used as the material of the first phase region 31. In addition, the crystal structure of the first solid electrolyte in the first phase region 31 can be considered to be the same as that of the first solid electrolyte used as the material of the first phase region 31.

Similarly, the composition of the second phase region 32 in the solid electrolyte layers of Example 1 to Example 15, Comparative Example 1, and Comparative Example 2 can be considered to be the same as that of the second solid electrolyte used as the material of the second phase region 32. In addition, the crystal structure of the second solid electrolyte in the second phase region 32 can be considered to be the same as that of the second solid electrolyte used as the material of the second phase region 32.

**[Table 1]**

| | Region A (γ-Li₃PO₄ structure) | Regi on A Si/P | Region B (Li₄SiO₄ structure) | Regi on B Si/V | Regio nA volum e percen tage | Regio n B volum e percen tage | Regi on A/reg ion B | Ion conduct ivity (S/cm) |
|---|---|---|---|---|---|---|---|---|
| Exampl e 1 | Li_{3.4}Si_{0.4}V_{0 .6}O₄ | 0.67 | Li_{3.6}Si_{0.6}V_{0 .4}O₄ | 1.5 | 0.05 | 0.95 | 0.05 | 2.00E-05 |
| Exampl e 2 | Li_{3.4}Si_{0.4}V_{0 .6}O₄ | 0.67 | Li_{3.6}Si_{0.6}V_{0 .4}O₄ | 1.5 | 0.1 | 0.9 | 0.11 | 3.00E-05 |
| Exampl e 3 | Li_{3.4}Si_{0.4}V_{0 .6}O₄ | 0.67 | Li_{3.6}Si_{0.6}V_{0 .4}O₄ | 1.5 | 0.2 | 0.8 | 0.25 | 4.00E-05 |
| Exampl e 4 | Li_{3.4}Si_{0.4}V_{0 .6}O₄ | 0.67 | Li_{3.6}S1_{0.6}V_{0 .4}O₄ | 1.5 | 0.5 | 0.5 | 1 | 5.00E-05 |
| Exampl e 5 | Li_{3.4}Si_{0.4}V_{0 .6}O₄ | 0.67 | Li_{3.6}Si_{0.6}V_{0 .4}O₄ | 1.5 | 0.8 | 0.2 | 4 | 3.50E-05 |
| Exampl e 6 | Li_{3.4}Si_{0.4}V_{0 .6}O₄ | 0.67 | Li_{3.6}Si_{0.6}V_{0 .4}O₄ | 1.5 | 0.9 | 0.1 | 9 | 3.00E-05 |
| Exampl e 7 | Li_{3.4}Si_{0.4}V_{0 .6}O₄ | 0.67 | Li_{3.6}Si_{0.6}V_{0 .4}O₄ | 1.5 | 0.95 | 0.05 | 19 | 2.00E-05 |
| Exampl e 8 | Li_{3.44}Si_{0.44} V_{0.56} | 0.79 | Li_{3.6}Si_{0.6}V_{0 .4}O₄ | 1.5 | 0.5 | 0.5 | 1 | 4.50E-05 |
| Exampl e 9 | Li_{3.33}Si_{0.33} V_{0.67}O₄ | 0.49 | Li_{3.6}Si_{0.6}V_{0 .4}O₄ | 1.5 | 0.5 | 0.5 | 1 | 3.30E-05 |
| Exampl e 10 | Li_{3.1}Si_{0.1}V_{0 .9}O₄ | 0.11 | Li_{3.6}Si_{0.6}V_{0 .4}O₄ | 1.5 | 0.5 | 0.5 | 1 | 2.50E-05 |
| Exampl e 11 | Li_{3.05}Si_{0.05} V_{0.95}O₄ | 0.05 | Li_{3.6}Si_{0.6}V_{0 .4}O₄ | 1.5 | 0.5 | 0.5 | 1 | 2.20E-05 |
| Exampl e 12 | Li_{3.4}Si_{0.4}V_{0 .6}O₄ | 0.67 | Li_{3.95}Si_{0.95} V_{0.05}O₄ | 19.0 | 0.5 | 0.5 | 1 | 2.50E-05 |
| Exampl e 13 | Li_{3.4}Si_{0.4}V_{0 .6}O₄ | 0.67 | Li_{3.67}Si_{0.67} V_{0.33}O₄ | 2.0 | 0.5 | 0.5 | 1 | 4.30E-05 |
| Exampl e 14 | Li_{3.4}Si_{0.4}V_{0 .6}O₄ | 0.67 | Li_{3.83}Si_{0.83} V_{0.17}O₄ | 4.9 | 0.5 | 0.5 | 1 | 3.20E-05 |
| Exampl e 15 | Li_{3.4}Si_{0.4}V_{0 .6}O₄ | 0.67 | Li_{3.9}Si_{0.9}V_{0 .1}O₄ | 9.0 | 0.5 | 0.5 | 1 | 2.50E-05 |
| Exampl e 16 | Li_{3.4}Si_{0.4}V_{0 .6}O₄ | 0.67 | Li_{3.91}Si_{0.91} V_{0.09}O₄ | 10.1 | 0.5 | 0.5 | 1 | 2.30E-05 |
| Compar ative Exampl e 1 | Li_{3.4}Si_{0.4}V_{0 .6}O₄ | 0.67 | - | - | 1 | 0 | - | 2.00E-05 |
| Compar ative Exampl e 2 | - | - | Li_{3.6}Si_{0.6}V_{0 .4}O₄ | 1.5 | 0 | 1 | - | 1.50E-05 |

In addition, for the solid electrolyte layers of Example 1 to Example 16, Comparative Example 1, and Comparative Example 2, the volume percentage (volume%) of the first phase region 31 in the solid electrolyte layer 3, the volume percentage (volume%) of the second phase region 32 in the solid electrolyte layer 3, and the ratio of the volume of the first phase region 31 to the volume of the second phase region 32 (first phase region/second phase region) were obtained by the following method. The results are shown in Table 1.

The solid electrolyte layer 3 was cut to expose a cross section, and a clear cross section was obtained using a Cross Section Polisher (CP). Then, the obtained cross section was observed at 5,000x using a scanning electron microscope (SEM) to obtain secondary electron composition images of 10 fields of view.

The light and dark contrast particles in the obtained secondary electron composition images of 10 fields of view were each subjected to composition analysis by energy dispersive X-ray analysis (EDS) to distinguish between the first phase region 31 and the second phase region 32. Then, each secondary electron composition image was converted into a monochrome image and binarized, and the number of pixels in a part corresponding to the first phase region 31 and a part corresponding to the second phase region 32 in each field of view was measured, and all were added together.

Then, by the following formula, the volume percentages of the first phase region 31 and the second phase region 32 were calculated for each field of view, and the average value for the 10 fields of view was used as the volume percentage (volume%) of each region. volume percentage (volume%) of the first phase region 31 (or the second phase region 32)=(number of pixels of the first phase region 31 (or the second phase region 32) in the field of view/total number of pixels in the field of view)×100

In addition, using the obtained volume percentage of each region, the ratio of the volume percentage of the first phase region 31 to the volume percentage of the second phase region 32 was calculated as (first phase region/second phase region).

### (Measurement of ion conductivity)

The mixed powder produced in the process of producing the solid electrolyte layers of Example 1 to Example 8, the particles made of the first solid electrolyte produced in the process of producing the solid electrolyte layer of Comparative Example 1, and the particles made of the second solid electrolyte produced in the process of producing the solid electrolyte layer of Comparative Example 2 were each molded into a disk shape to obtain a molded component. The obtained molded component was fired by heating at 900°C for 1 hour in an air atmosphere to obtain a solid electrolyte layer for ion conductivity measurement.

Electrodes were connected to both surfaces of the obtained solid electrolyte layer, and the ion conductivity was measured using an impedance analyzer (model number SI1260, commercially available from Solartron) under conditions of an amplitude of 50 mV and a frequency of 0.5 Hz to 1 MHz. The results are shown in Table 1.

As shown in Table 1, the solid electrolyte layers of Example 1 to Example 16 had a higher ion conductivity than the solid electrolyte layers of Comparative Example 1 and Comparative Example 2.

Particularly, the solid electrolyte layers of Example 2 to Example 6, and Example 8 to Example 16 in which the ratio of the volume of the first phase region to the volume of the second phase region (first phase region/second phase region) was 0.1 or more and 9 or less had a higher ion conductivity than the solid electrolyte layers of Example 1 and Example 7.

In addition, Example 3 in which the ratio (Si/V of the first phase region) of the number of Si atoms to the number of V atoms contained in the first phase region was 0.67 had a higher ion conductivity than Example 11 in which the Si/V of the first phase region was 0.05.

In addition, the Example 3 in which the ratio (Si/V of the second phase region) of the number of Si atoms to the number of V atoms contained in the second phase region was 1.5 had a higher ion conductivity than Example 12 in which the Si/V of the second phase region was 19.

### [Industrial Applicability]

According to the present invention, it is possible to provide a solid electrolyte layer having high ion conductivity and an all-solid-state secondary battery having the same.

### REFERENCE SIGNS LIST

1 Positive electrode layer
1A Positive electrode current collector
1B Positive electrode active material layer
2 Negative electrode layer
2A Negative electrode current collector
2B Negative electrode active material layer
3 Solid electrolyte layer
4 Laminate
5 First external terminal
6 Second external terminal
10 All-solid-state secondary battery
31 First phase region
32 Second phase region
33 Grain boundary
33a Grain boundary layer

## Claims

1. A solid electrolyte layer comprising:
a first phase region containing a first solid electrolyte which contains Li, Si, V, and O and has a γ-Li₃PO₄ type crystal structure; and
a second phase region containing a second solid electrolyte which contains Li, Si, V, and O, has a different composition from the first solid electrolyte, and has a Li₄SiO₄ type crystal structure.

2. The solid electrolyte layer according to claim 1,
wherein the ratio of the volume of the first phase region to the volume of the second phase region is 0.1 or more and 9 or less.

3. The solid electrolyte layer according to claim 1 or 2,
wherein the ratio of the number of Si atoms to the number of V atoms contained in the first phase region is 0.1 or more and less than 1.

4. The solid electrolyte layer according to any one of claims 1 to 3,
wherein the ratio of the number of Si atoms to the number of V atoms contained in the second phase region is 1 or more and 9 or less.

5. An all-solid-state secondary battery, comprising
the solid electrolyte layer according to any one of claims 1 to 4, a positive electrode layer, and a negative electrode layer, the solid electrolyte layer being sandwiched between the positive electrode layer and the negative electrode layer.
